# EUROPÄISCHE PATENTANMELDUNG

(11) **EP 2 596 882 A1**
(43) Veröffentlichungstag der Anmeldung: **29.05.2013**
(21) Anmeldenummer: 11190367.0
(22) Anmeldetag: 23.11.2011
(51) Int. Cl.: B22D 17/32, G01N 3/28, G01N 3/36, G01N 11/00, G07C 3/14, G01N 3/38

(54) **Verbesserte Prüfmethode für Gussstücke**

(71) Anmelder: Bühler AG, 9240 Uzwil (CH)
(72) Erfinder: Frech, Rupert, 36199 Rotenburg (DE)
(74) Vertreter: Hepp Wenger Ryffel AG

(57) **Zusammenfassung**

Die vorliegende Erfindung betrifft eine Methode zur Prüfung der plastischen Verformbarkeit eines Gussstücks (1), insbesondere eine Druckgussstücks, umfassend die Schritte: Bereitstellung eines Gussstücks (1), insbesondere durch Herstellung in einem Druckgussverfahren, Untersuchung des Gussstücks (1) anhand des Tiefungsversuchs nach Erichsen, wobei die vorstehenden Schritte online durchgeführt werden. Die vorliegende Erfindung betrifft weiterhin eine Entgratungsvorrichtung mit integriertem Prüfgerät, eine Giesszelle mit Prüfgerät, ein Verfahren zur Herstellung von Gussstücken (1) unter Verwendung der vorstehenden Methode sowie ein Gussstück (1) mit spezieller Prüfzone (2).

## Beschreibung

Die vorliegende Erfindung betrifft eine verbesserte Prüfmethode für Gussstücke, insbesondere Druckgussstücke.

Insbesondere im Automobil- und Luftfahrtsektor werden zunehmend Gussstücke eingesetzt, welche während des Gebrauchs hohen mechanischen Beanspruchungen ausgesetzt werden. Gleichzeitig steigen die Sicherheitsanforderungen an derartige Bauteile. Beispielhaft seien hier Strukturbauteile der Karosserie sowie Fahrwerksbauteile genannt. Von besonderer Relevanz für den Einsatz von Gussstücken in diesem Sektor ist deren plastische Verformbarkeit beim Fügen, insbesondere Clinchen, und im Crash-fall.

Derartige Gussstücke werden vor allem über das bekannte Druckgussverfahren hergestellt. Hierbei werden schmelzflüssige Metall-Legierungen unter hohem Druck und hoher Geschwindigkeit in eine Dauerform gepresst, wo sie zu einem Gussstück der gewünschten Form erstarren und anschliessend der Form entnommen werden können. Das Druckgussverfahren sowie die hierfür eingesetzten Druckgussmaschinen sind dem Fachmann bekannt und müssen hier nicht näher erläutert werden. Häufig werden vollautomatisierte Giesszellen eingesetzt, welche neben der Druckgussmaschine selbst, auch automatische Entnahmevorrichtungen und Entgratungseinrichtungen umfassen.

Bislang gibt es keine Prüfmethode, welche in den Giessprozess integriert ist und online eine laufende Qualitätsüberwachung der mechanischen Eigenschaften der gefertigten Gussstücke ermöglicht. Bislang wurden stichprobenartig den Gussstücken Zugprüfstäbe entnommen und aufwendig in einem Labor auf ihre mechanischen Eigenschaften untersucht. Neben der unvorteilhaften Zerstörung eines Gussstückes zur Gewinnung des Prüfstabes ist diese Prüfmethode mit diversen Nachteilen verbunden. Die entnehmbaren Prüfstäbe weisen prozessbedingt häufig nicht alle zu prüfenden Bauteileigenschaften auf. Das gesamte Prüfverfahren ist zeitlich sehr aufwendig und nur mit gut geschultem Fachpersonal durchführbar. Die Resultate der Prüfung liegen somit erst mit erheblicher zeitlicher Verzögerung vor. In der Zwischenzeit wird die Fertigung der Gussstücke in Unkenntnis dessen fortgeführt, ob die hergestellten Gussstücke den Qualitätsanforderungen entsprechen. Dies stellt natürlich ein grosses Produktionsrisiko dar. Eine hundertprozentige Qualitätskontrolle eines jeden Abgusses ist nicht möglich.

Es bestand daher die Aufgabe der vorliegenden Erfindung in der Bereitstellung einer verbesserten Prüfmethode für Gussstücke, insbesondere für Druckgussstücke. Diese Prüfmethode muss zeitnah zur Fertigung des zu prüfenden Gussstückes durchführbar sein, so dass die Prüfergebnisse direkt in die Qualitätsbeurteilung des Giessvorganges einfliessen können.

Gemäss der vorliegenden Erfindung wird diese Aufgabe gelöst durch eine Methode zur Prüfung der plastischen Verformbarkeit eines Gussstücks, insbesondere eine Druckgussstücks, umfassend die Schritte:
- Bereitstellung eines Gussstücks,
- Untersuchung des Gussstücks anhand des Tiefungsversuchs nach Erichsen,
wobei die vorstehenden Schritte online durchgeführt werden.

Der Tiefungsversuch nach Erichsen ist eine Standard-Prüfmethode für Bleche und Bänder aus metallischen Werkstoffen. Die Prüfmethode ist in der Norm DIN EN ISO 20482 ausführlich beschrieben. Auf diese Norm wird hier ausdrücklich Bezug genommen.

Gemäss dieser Prüfmethode wird ein zu prüfendes Werkstück zwischen zwei Halterungen, allgemein als Blechhalter und Matrize bezeichnet, eingespannt. Die Halterungen weisen eine zentrale Bohrung auf, durch welche ein Stempel auf das zu prüfende Werkstück gedrückt wird. Das Werkstück wird eingedrückt, bis in der entstandenen Einbeulung ein durchgängiger Riss zu sehen ist. Die Einbeultiefe, welche dem Weg des Stempels bis zur Rissbildung entspricht, und die Einpresskraft, wird als Erichsen-Tiefungswert bezeichnet und als Resultat der Prüfmethode bestimmt. Für weitere Details wird auf die vorstehende Norm verwiesen.

Bislang wurde der Tiefungsversuch nach Erichsen im Druckgussbereich allenfalls als zusätzlicher Labortest zur Bestimmung der plastischen Verformbarkeit von Gussstücken aus verschiedenen Metall-Legierungen eingesetzt (Franke et al., Plastische Verformungsfähigkeit von Al-Druckgusslegierungen, Giesserei 93, 07/2006, S. 62-67). Die Prüfung erfolgte nicht zeitnah, sondern zeitlich versetzt in einem Labor nicht zur Qualitätsprüfung einer Reihe von gefertigten Gussstücken, sondern zum Vergleich der Materialeigenschaften von Gussstücken aus unterschiedlichen Metall-Legierungen.

Gemäss der vorliegenden Erfindung kann ein Gussstück per se dem Tiefungsversuch nach Erichsen unterzogen werden. In diesem Fall erfolgt keine hundertprozentige Qualitätsprüfung, da jede Prüfung mit der Zerstörung des Gussstücks einhergeht. Die Prüfung wird stattdessen stichpunktartig nach Herstellung einer bestimmten Anzahl von Gussstücken durchgeführt. Der erfindungsgemässe Vorteil der zeitnahen Qualitätsprüfung ist aber gegeben.

Gemäss einer bevorzugten Ausführungsform der vorliegenden Erfindung erfolgt die Prüfung der Gussstücke auf plastische Verformbarkeit zerstörungsfrei, indem für die Prüfung eine angegossene Prüfzone herangezogen wird, welches ohnehin vom Gussstück entfernt ("entgratet") werden muss. Gemäss dieser bevorzugten Ausführungsform wird während des Gussvorgangs, d.h. mit dem Abguss, nicht nur das Gussstück an sich hergestellt, sondern mit Hilfe einer entsprechenden Form wird während des Gussvorgangs eine zusätzliche Prüfzone geschaffen, welche mit dem Gussstück fest verbunden ist. Die Prüfzone weist die gleichen Materialeigenschaften wie das eigentliche Gussstück auf, gehört aber nicht zum eigentlichen Gussstück und wird daher nach dem Giessvorgang vom Gussstück entfernt, d.h. entgratet. Hierfür können herkömmliche Methoden zur Entgratung von Gussstücken herangezogen werden.

Bei der Herstellung von Gussstücken bilden sich an den Kanten von aneinandergrenzenden Teilen der Gussform Grate, da das schmelzflüssige Giessmaterial (Kunststoff oder im Druckguss Metalle oder Metall-Legierungen) unter den hohen Drücken während des Giessvorgangs in Spalte zwischen den Formteilen eindringt und dort erstarrt. Diese Grate müssen nach beendetem Gussvorgang vom Gussstück entfernt werden. Zur Gratentfernung sind im Stand der Technik verschiedene Massnahmen bekannt, z.B. eine mechanische Entfernung mit Hilfe von Schleif- oder Schneidwerkzeugen (was nur bei geringen Stückzahlen zur Anwendung kommt), eine Entfernung mittels Strahlen (Strahlentgraten usw.) oder eine Entfernung mit Hilfe eines Entgratungsschnittes in einer Entgratungspresse.

Erfindungsgemäss bevorzugt erfolgt die Entgratung mittels einer Entgratungspresse. Entgratungspressen sind hinlänglich bekannt und beispielsweise in der DE 102 25 528 A1 beschrieben.

Zur Durchführung des Tiefungsversuchs nach Erichsen muss das Gussstück (zumindest dessen untersuchter Abschnitt) oder gemäss der bevorzugten Ausführungsform die Prüfzone ein flaches Werkstück mit einer ausreichend grossen Breite und Dicke sein. Bevorzugt sind Werkstücke mit einer Dicke von 0,8 mm bis 4,0 mm und einer Breite von mindestens 90 mm. Es ist aber durchaus möglich, dickere Werkstücke und/oder schmalere Werkstücke zu testen.

Gegenstand der vorliegenden Erfindung ist daher auch ein Gussstück, insbesondere ein Druckgussstück, umfassend eine Prüfzone mit geeigneten Dimensionen für eine Prüfung seiner plastischen Verformbarkeit anhand des Tiefungsversuchs nach Erichsen.

Gemäss der vorliegenden Erfindung kann die Prüfung des Gussstücks oder der Prüfzone auf seine plastische Verformbarkeit direkt nach Entnahme des Gussstücks aus der Form erfolgen, indem der Tiefungsversuch nach Erichsen unmittelbar im Anschluss an den Giessvorgang durchgeführt wird. Alternativ kann aber auch eine Entgratung des Gussstücks während oder nach dem Tiefungsversuch nach Erichsen durchgeführt werden.

Bei der erfindungsgemässen Ausführungsform der Untersuchung der Prüfzone (nicht des Gussstücks per se) kann die Prüfung ebenfalls direkt im Anschluss an den Giessvorgang (d.h. wenn sich die Prüfzone noch am Gussstück befindet) oder während oder nach einer sich anschliessenden Entgratung (d.h. während des Abtrennens der Prüfzone oder an der bereits abgetrennten Prüfzone) durchgeführt werden.

Gemäss der vorliegenden Erfindung wird ein Prüfgerät zur Durchführung des Tiefungsversuchs nach Erichsen in räumlicher Nähe zur Druckgussmaschine und/oder Entgratungsvorrichtung, vorzugsweise der Entgratungspresse, angeordnet. Unter räumlicher Nähe soll hierbei im allgemeinen Sinn verstanden werden, dass das Gussstück (mit oder ohne Prüfzone) beziehungsweise die vom Gussstück in der Entgratungsvorrichtung entfernte Prüfzone ohne wesentliche zeitliche Verzögerung dem Prüfgerät zur Durchführung des Tiefungsversuchs nach Erichsen zugeführt werden kann.

Erfindungsgemäss besonders bevorzugt ist das Prüfgerät derart zur Druckgussmaschine und/oder Entgratungsvorrichtung angeordnet, dass eine automatische Überführung des Gussstücks, d.h. Prüflings, zum Prüfgerät möglich ist, beispielsweise mittels eines Roboterarms, wie er herkömmlich in Giesszellen für den Druckguss zum Einsatz kommt. Mit dem Begriff "räumliche Nähe" soll eine Vorgehensweise ausgeschlossen werden, bei welcher das zu prüfende Gussstück oder die Prüfzone in einen vom Standort der Druckgussmaschine separaten Raum, beispielsweise ein Labor, gebracht und dort untersucht wird. Dies würde zu einer unerwünschten zeitlichen Verzögerung führen.

Der gesamte Vorteil der erfindungsgemässen Methode wird dann erreicht, wenn die Resultate des Prüfgeräts zur Durchführung des Tiefungsversuchs nach Erichsen für die nachfolgenden Druckgussvorgänge bereits berücksichtigt werden können, d.h. wenn die Herstellung des Gussstücks, gegebenenfalls dessen Entgratung und die Prüfung des Gussstücks oder der Prüfzone online erfolgen. Gemäss der vorliegenden Erfindung soll unter "online" verstanden werden, dass die einzelnen Methodenschritte aufeinander folgend durchgeführt werden, ohne dass es zu einer wesentlichen, nicht prozessbedingten Unterbrechung zwischen den einzelnen Schritten kommt.

Gemäss einer weiteren bevorzugten Ausführungsform der vorliegenden Erfindung ist das Prüfgerät zur Durchführung des Tiefungsversuchs nach Erichsen in eine Entgratungspresse integriert. Die Presswerkzeuge der Entgratungspresse dienen hierbei als Halterungen und müssen dahingehend modifiziert/angeordnet werden, dass sie einen Zugang des Prüfgeräts zur Prüfzone erlauben. Vorzugsweise kann als Prüfgerät ein elektromechanischer Servo-Prüfzylinder eingesetzt werden, wie er beispielsweise von der Firma Zwick vertrieben wird.

Die vorliegende Erfindung betrifft daher auch eine Entgratungspresse, umfassend mindestens ein Entgratungswerkzeug, eine Presse zur Fixierung eines Werkstücks, und ein Prüfgerät zur Durchführung des Tiefungsversuchs nach Erichsen, welches derart angeordnet ist, dass es den Tiefungsversuch durchführen kann, während das Werkstück in der Presse fixiert ist.

Der Zugang des Prüfgeräts zum Werkstück kann beispielsweise dadurch ermöglicht werden, dass die Presswerkzeuge der Entgratungspresse Bohrungen aufweisen, durch welche das Prüfgerät zum eingepressten Werkstück gelangt und dieses testen kann. Alternativ kann das Prüfgerät seitlich an mindestens einem der Presswerkzeuge vorbei auf das Werkstück (das Gussstück oder die Prüfzone) geführt werden. Voraussetzung ist hierbei jedoch die ausreichende Fixierung des Werkstücks am Untersuchungsort.

Mit Hilfe der erfindungsgemässen Entgratungspresse ist es grundsätzlich möglich, den Tiefungsversuch nach Erichsen, vor, während oder nach der eigentlichen Entgratung des Gussstücks an der Prüfzone oder am Gussstück selbst durchzuführen.

Erfindungsgemäss bevorzugt ist die Durchführung des Tiefungsversuchs an der entsprechenden Prüfzone, bevor diese mit Hilfe des Entgratungswerkzeugs vom Gussstück entfernt wird.

Erfindungsgemäss können herkömmliche Entgratungswerkzeuge eingesetzt werden, wie sie beispielsweise in der DE 102 25 528 A1 beschrieben sind. Diese herkömmlichen Entgratungswerkzeuge werden mit einem Prüfgerät zur Durchführung des Tiefungsversuchs nach Erichsen ausgestattet. Falls erforderlich, werden die Presswerkzeuge des Entgratungswerkzeugs derart modifiziert, beispielsweise durch Bohrungen, dass das Prüfgerät Zugang zum Werkstück (Gussstück oder Prüfzone) erhält, welches von den Presswerkzeugen fixiert ist.

Gegenstand der vorliegenden Erfindung ist weiterhin eine Giesszelle, umfassend eine Druckgussmaschine und ein Prüfgerät zur Durchführung des Tiefungsversuchs nach Erichsen sowie gegebenenfalls ein Engratungswerkzeug.

Giesszellen für den Druckguss sind hinlänglich bekannt. Es handelt sich um eine räumliche Einheit aus einer Druckgussmaschine und Peripheriegeräten, welche für die Herstellung von Gussstücken erforderlich oder vorteilhaft sind. Vorzugsweise wird eine Giesszelle als ein System bereitgestellt, bei welcher sämtliche Geräte an oder in einem abgeschlossenen Raum angeordnet sind, von welchem aus sie bedient werden können. Beispielsweise kann es sich hierbei um eine umzäunte Empore handeln, welche in einer Betriebshalle angeordnet sein kann.

In der Giesszelle können herkömmliche Druckgussmaschinen eingesetzt werden. Als Beispiel sei die Baureihe CARAT der Anmelderin genannt.

In der erfindungsgemässen Giesszelle befindet sich gegebenenfalls ein Entgratungswerkzeug, vorzugsweise eine Entgratungspresse. Gemäss der vorliegenden Erfindung ist das Entgratungswerkzeug bevorzugt derart zur Druckgussmaschine angeordnet, dass ein in der Druckgussmaschine hergestelltes Gussstück automatisch zum Entgratungswerkzeug befördert werden kann, beispielsweise mit Hilfe von Entnahmerobotern, wie sie üblicherweise in diesem Gebiet eingesetzt werden.

Wie vorstehend beschrieben kann die Durchführung des Tiefungsversuchs nach Erichsen in einem Prüfgerät erfolgen, welches als separate Einheit innerhalb der Giesszelle angeordnet ist. Auch in diesem Fall ist es bevorzugt, dass das zu prüfende Werkstück (hier das Gussstück oder die bereits entgratete Prüfzone) automatisch zum Prüfgerät befördert werden kann, beispielsweise mit Hilfe von Entnahmerobotern, wie sie üblicherweise in diesem Gebiet eingesetzt werden.

Gemäss einer bevorzugten Ausführungsform der vorliegenden Erfindung umfasst die Giesszelle jedoch statt separatem Entgratungswerkzeug und/oder Prüfgerät ein vorstehend beschriebenes Entgratungswerkzeug mit integriertem Prüfgerät.

Die erfindungsgemässe Giesszelle kann weitere Peripheriegeräte umfassen, welche dem Fachmann bekannt sind und üblicherweise in Giesszellen für den Druckgrussbereich eingesetzt werden. Beispielhaft seien Metalldosiergerät, Formsprühmaschine, Vakuumpumpen, Steuergeräte sowie Einheiten zur Lagerung oder Markierung der Gussstücke genannt.

Mit Hilfe der vorstehend beschriebenen Prüfmethode und hierzu verwendbaren Geräte und Anlagen ist eine deutliche Verbesserung des Druckgussverfahrens möglich. Das Druckgussverfahren kann zerstörungsfrei und mit hundertprozentiger Qualitätsprüfung durchgeführt werden, wenn zur Prüfung der plastischen Verformbarkeit ausschliesslich die Prüfzone verwendet wird.

Die Resultate der Qualitätsprüfung liegen am Ende eines Gusszyklus vor, da die Prüfung online und vorzugsweise innerhalb derselben Giesszelle vorgenommen wird. Das Prüfergebnis kann somit bereits in einem Folgegiesszyklus berücksichtigt werden. Es ist eine ständige Anpassung des Giessprozesses möglich. Die Anzahl an hergestellten unbrauchbaren Gussstücken kann erheblich verringert werden. Das Risiko der Herstellung unbrauchbarer Gussstücke verringert sich ebenfalls signifikant und auch die Prozesskosten sinken. Weiterhin ergibt sich eine Einsparung von Prüfaufwand im Labor.

Vorzugsweise werden die Daten der Materialprüfung in die Prozessdaten zum Betreiben der Giesszelle (insbesondere der Druckgussmaschine) eingebunden. Da die mechanischen Eigenschaften eines Gussstücks direkt von den Giessbedingungen abhängen, können die Materialeigenschaften der Gussstücke direkt anhand der ständig durchgeführten Prüfung angepasst und verbessert werden. Es ergibt sich eine sehr hohe Prozesssicherheit. Dies stellt einen erheblichen ökonomischen Vorteil des erfindungsgemässen Verfahrens dar und öffnet neue Einsatzmöglichkeiten.

Die vorliegende Erfindung betrifft somit weiterhin ein Verfahren zur Herstellung von Gussstücken, insbesondere von Druckgussstücken, umfassend die Schritte:
- Durchführung der vorstehend beschriebenen Prüfmethode;
- Anpassung der Parameter eines Giessverfahrens auf der Basis der Resultate der in Schritt a) durchgeführten Methode, sofern in der Prüfmethode ein Bedarf hierfür ermittelt wurde
- Gegebenenfalls erneute Durchführung der vorstehenden Schritte, bis eine gewünschte Anzahl an Gussstücken gewünschter Qualität hergestellt wurde
- Gegebenenfalls Dokumentation von Materialkennwerten der im Prozess geprüften Gussstücke als Nachweis der mechanischen Eigenschaften.

Erfindungsgemäss bevorzugt ist das Giessverfahren ein Druckgussverfahren.

Die Anpassung der Giessparameter auf der Basis der Resultate der vorgängig durchgeführten Prüfmethode kann vom Fachmann aufgrund seines Fachwissens durchgeführt werden. Beispielsweise können der Giessdruck, die Giesstemperatur, die Formfüllzeit, die Restfeuchte der Form, das Vakuum in der Formkavität in Abhängigkeit des Ergebnisses des Tiefungsversuchs nach Erichsen variiert werden.

Anschliessend erfolgt eine Herstellung eines weiteren Gussstücks und dessen Prüfung. Dies wird so lange durchgeführt, bis ein hergestelltes Gussstück den aufgestellten Qualitätsanforderungen entspricht. Ab diesem Zeitpunkt ist es nicht mehr notwendig, bei jedem neu hergestellten Gussstück eine Prüfung auf dessen plastische Verformbarkeit durchzuführen. Es genügen beispielsweise stichpunktartige bzw. statistische Überprüfungen der hergestellten Gussstücke. Für qualitativ sehr anspruchsvolle Gussstücke ist aber nach wie vor die Prüfung jedes weiteren hergestellten Gussstückes sinnvoll.

Die vorliegende Erfindung eignet sich besonders zur Herstellung von Struktur- und Fahrwerksbauteilen aus Nichteisen-Materialien, wie beispielsweise Aluminium- und/oder Magnesiumlegierungen.

Obwohl vorstehend die vorliegende Erfindung hauptsächlich für den Druckgussbereich beschrieben wurde, sei darauf hingewiesen, dass auch ein Einsatz im Verbundguss mit Fasern und für Metallschäume sowie Spritzgussbereich möglich ist. Die vorliegende Erfindung kann vom Fachmann problemlos auf das Spritzgussverfahren angewendet und adaptiert werden.

Die vorliegende Erfindung wird nachstehend anhand von nicht einschränkenden Figuren nähert erläutert. Es zeigen:
- Fig. 1: ein Ablaufdiagramm gemäss einer ersten Ausführungsform des erfindungsgemässen Verfahrens
- Fig. 2: ein Ablaufdiagramm gemäss einer zweiten Ausführungsform des erfindungsgemässen Verfahrens
- Fig. 3: ein Ablaufdiagramm gemäss einer dritten Ausführungsform des erfindungsgemässen Verfahrens
- Fig. 4: eine schematische Darstellung eines erfindungsgemässen Gussstücks mit Prüfzone

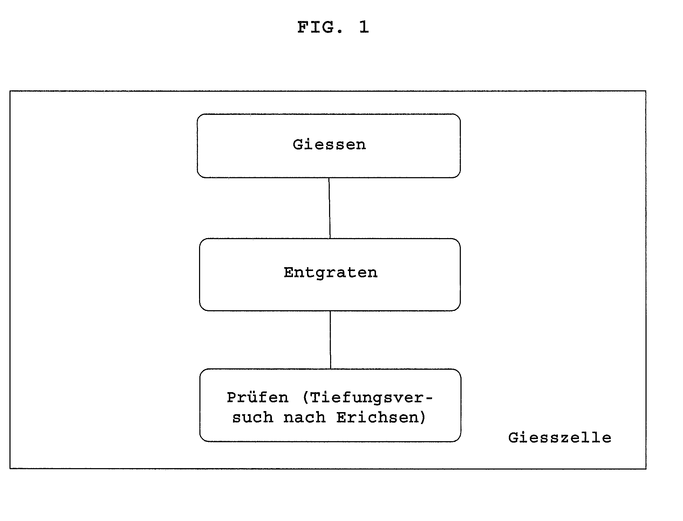

In den Figuren 1 bis 3 sind schematisch die Anordnung der einzelnen Schritte des erfindungsgemässen Verfahrens dargestellt.

Bei der Ausführungsform gemäss Fig.1 wird zunächst das Gussstück in einer Giessvorrichtung gegossen, vorzugsweise in einer Druckgussvorrichtung. Anschliessend wird das Gussstück innerhalb derselben Giesszelle in einer Entgratungsvorrichtung entgratet. Schliesslich findet innerhalb derselben Giesszelle mit einem entsprechenden Prüfgerät die Prüfung anhand des Tiefungsversuchs nach Erichsen statt. Die Prüfung kann hierbei am Gussstück selbst oder an einer bei der Entgratung abgetrennten Prüfzone durchgeführt werden.

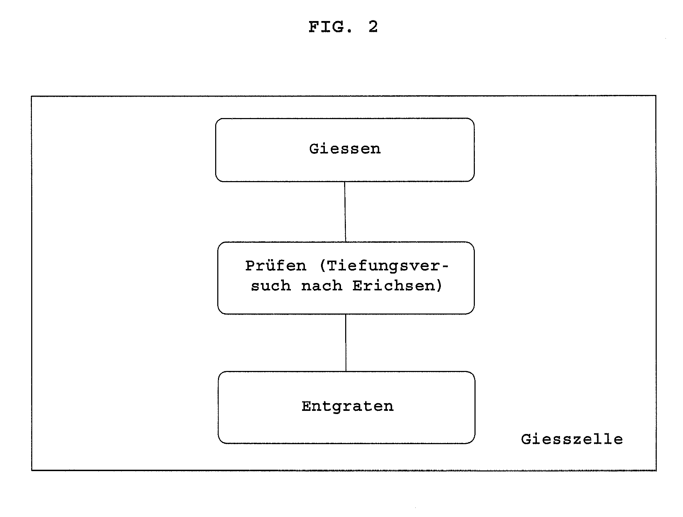

Bei der Ausführungsform gemäss Fig.2 wird zunächst das Gussstück in einer Giessvorrichtung gegossen, vorzugsweise in einer Druckgiessvorrichtung. Anschliessend findet innerhalb derselben Giesszelle mit einem entsprechenden Prüfgerät die Prüfung anhand des Tiefungsversuchs nach Erichsen statt. Die Prüfung kann hierbei am Gussstück selbst oder an einer am Gussstück angeordneten Prüfzone durchgeführt werden. Schliesslich wird das Gussstück innerhalb derselben Giesszelle in einer Entgratungsvorrichutng entgratet.

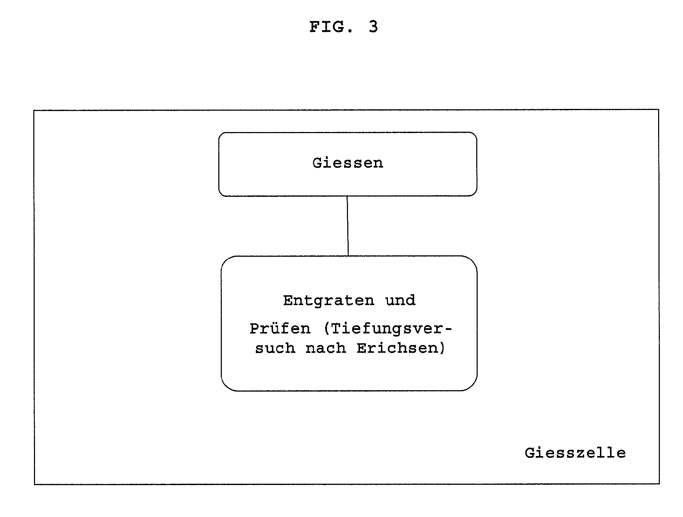

Bei der Ausführungsform gemäss Fig.3 wird zunächst das Gussstück in einer Giessvorrichtung gegossen, vorzugsweise in einer Druckgiessvorrichtung. Anschliessend finden innerhalb derselben Giesszelle die Schritte der Prüfung anhand des Tiefungsversuchs nach Erichsen sowie der Entgratung statt. Bei dieser Ausführungsform ist ein entsprechendes Prüfgerät für den Tiefungsversuch nach Erichsen in eine Entgratungsvorrichtung integriert, so dass die Prüfung, entweder am Gussstück selbst oder an einer am Gussstück angeordneten Prüfzone, noch vor der Entgratung, während der Entgratung oder unmittelbar nach der Entgratung in derselben Vorrichtung durchgeführt werden kann.

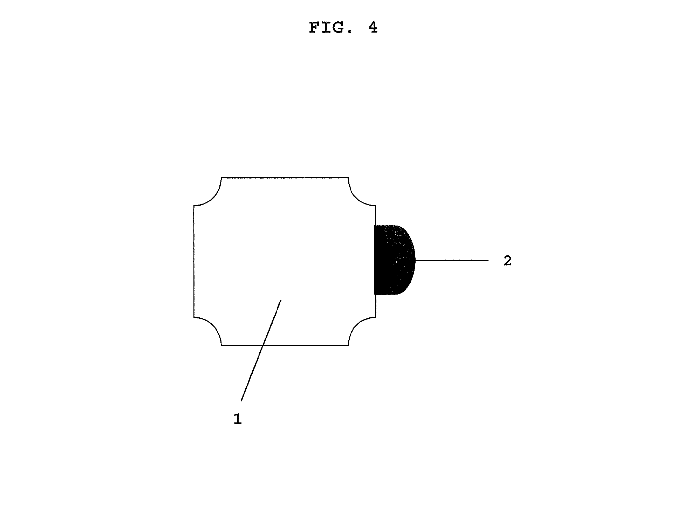

In Fig. 4 ist schematisch ein erfindungsgemässes Gussstück 1 mit einer daran angeordneten Prüfzone 2 gezeigt. Das Gussstück 1 und die Prüfzone 2 können dabei beliebige gewünschte Formen haben, solange eines der beiden Teile die für die Durchführung des Tiefungsversuchs nach Erichsen geeigneten Dimensionen aufweist, wie sie in der Norm DIN EN ISO 20482 ausführlich beschrieben sind. Die Prüfzone 2 wird vorzugsweise dadurch erzeugt, dass während des Gussvorgangs eine Form eingesetzt wird, welche nicht nur die Kavität entsprechend der Form des Gussstücks aufweist, sondern auch entsprechend der Prüfzone. Wie vorstehend be-schrieben wird die Prüfzone 2 nach Durchführung des Tiefungsversuchs nach Erichsen mit Hilfe einer herkömmlichen Entgrat-ungsvorrichtung vom Gussstück 1 entfernt.

## Patentansprüche

1. Methode zur Prüfung der plastischen Verformbarkeit eines Gussstücks (1), insbesondere eine Druckgussstücks, umfassend die Schritte:
- Bereitstellung eines Gussstücks (1), insbesondere durch Herstellung in einem Druckgussverfahren,
- Untersuchung des Gussstücks (1) anhand des Tiefungsversuchs nach Erichsen,
wobei die vorstehenden Schritte online durchgeführt werden.

2. Methode nach Anspruch 1, **dadurch gekennzeichnet, dass** ein Gussstück (1) mit einer Prüfzone (2) bereitgestellt wird, wobei die Prüfzone (2) geeignete Dimensionen für eine Prüfung seiner plastischen Verformbarkeit aufweist, und die Untersuchung des Gussstücks (1) anhand der Prüfzone (2) durchgeführt wird.

3. Methode nach Anspruch 1 oder 2, **dadurch gekennzeichnet, dass** das Gussstück (1) oder die Prüfzone (2) vor, während oder nach seiner Untersuchung anhand des Tiefungsversuchs nach Erichsen entgratet wird.

4. Methode nach Anspruch 3, **dadurch gekennzeichnet, dass** die Entgratung mit Hilfe einer Entgratungsvorrichtung, vorzugsweise einer Entgratungspresse, durchgeführt wird.

5. Methode nach Anspruch 4, **dadurch gekennzeichnet, dass** die Schritte der Entgratung und der Untersuchung anhand des Tiefungsversuchs in einer Entgratungspresse mit integriertem Prüfgerät zur Durchführung des Tiefungsversuchs durchgeführt werden.

6. Methode nach einem der Ansprüche 1 bis 5, **dadurch gekennzeichnet, dass** sämtliche Schritte der Methode in einer einzigen Giesszelle durchgeführt werden.

7. Entgratungswerkzeug, umfassend mindestens ein Entgratungswerkzeug, eine Presse zur Fixierung eines Werkstücks, und ein Prüfgerät zur Durchführung des Tiefungsversuchs nach Erichsen, welches derart angeordnet ist, dass es den Tiefungsversuch durchführen kann, während das Werkstück in der Presse fixiert ist.

8. Entgratungswerkzeug nach Anspruch 7, **dadurch gekennzeichnet, dass** das Prüfgerät ein elektromechanischer Servo-Prüfzylinder ist.

9. Giesszelle, umfassend eine Druckgussmaschine und ein Prüfgerät zur Durchführung des Tiefungsversuchs nach Erichsen sowie gegebenenfalls ein Engratungswerkzeug.

10. Giesszelle nach Anspruch 9, **dadurch gekennzeichnet, dass** das Prüfgerät als separate Einheit in der Giesszelle angeordnet ist.

11. Gieszelle nach Anspruch 9, **dadurch gekennzeichnet, dass** die Giesszelle ein Entgratungswerkzeug gemäss einem der Ansprüche 7 oder 8 umfasst.

12. Verfahren zur Herstellung von Gussstücken, insbesondere von Druckgussstücken, umfassend die Schritte:
a) Durchführung einer Methode gemäss einem der Ansprüche 1 bis 6;
b) Anpassung der Parameter eines Giessverfahrens auf der Basis der Resultate der in Schritt a) durchgeführten Methode, sofern in Schritt a) ein Bedarf hierfür ermittelt wurde,
c) Gegebenenfalls erneute Durchführung der Schritts a) und b), bis eine gewünschte Anzahl an Gussstücken (1) gewünschter Qualität hergestellt wurde,
d) Gegebenenfalls Dokumentation von Materialkennwerten der im Prozess geprüften Gussstücke als Nachweis der mechanischen Eigenschaften.

13. Verwendung einer Entgratungsvorrichtung nach einem der Ansprüche 7 oder 8 bei der Herstellung von Gussstücken (1), insbesondere Druckgussstücken.

14. Verwendung einer Giesszelle nach einem der Ansprüche 9 bis 11 zur Herstellung von Gussstücken (1), insbesondere Druckgussstücken.

15. Gussstück (1), insbesondere ein Druckgussstück, umfassend eine Prüfzone (2) mit geeigneten Dimensionen für eine Prüfung seiner plastischen Verformbarkeit anhand des Tiefungsversuchs nach Erichsen .
